# DEMANDE DE BREVET EUROPEEN

(11) **EP 1 045 240 A1**
(43) Date de publication de la demande: **18.10.2000**
(21) Numéro de dépôt: 00401018.7
(22) Date de dépôt: 12.04.2000
(51) Int. Cl.: G01N 1/40, C12M 3/02

(54) **Procédé de préparation d'une suspension cytologique**

(30) Priorité: 14.04.1999 FR 9904662
(71) Demandeur: Labonord, 59175 Templemars (FR); Peltier, Eric, 92160 Antony (FR)
(72) Inventeur: Peltier, Eric, 92160 Antony (FR)
(74) Mandataire: Habasque, Etienne Joel Jean-François

(57) **Abrégé**

Ce procédé de préparation d'une suspension cytologique à partir d'une suspension cellulaire brute obtenue à partir de prélèvements tissulaires solides et contenant différents composants solides, est caractérisé en ce qu'il comporte les étapes suivantes : on verse la suspension cellulaire brute (4) dans un récipient (3), on sépare les différents composants solides de celle-ci, selon un gradient de densité, dans le récipient (3), on retire du récipient (3), certains des composants ainsi séparés, et on remet en suspension les composants solides.

## Description

La présente invention concerne un procédé de préparation d'une suspension cytologique à partir d'une suspension cellulaire brute obtenue à partir de prélèvements tissulaires solides et contenant différents composants solides.

Ce type de prélèvements est généralement réalisé à l'aide de brosses spécifiques qui sont ensuite déposées dans des flacons contenant un fixateur, pour permettre la fixation homogène des prélèvements.

Cette suspension est appelée suspension cellulaire brute.

Celle-ci peut être une suspension cellulaire de type cervicale ou vaginale.

De façon générale également, cette suspension cellulaire brute est ensuite traitée pour obtenir une suspension cytologique qui peut être analysée, des composants de cette suspension cytologique étant déposés à cet effet, sur une plaque d'analyse.

Différents traitements de la suspension cellulaire brute pour obtenir la suspension cytologique sont déjà connus dans l'état de la technique.

C'est ainsi par exemple que les différents composants de la suspension cellulaire brute peuvent être séparés par centrifugation, selon un gradient de densité, dans un récipient, ce qui permet d'extraire de celle-ci, une partie jugée intéressante pour former la suspension cytologique que l'on va analyser.

En règle générale, la partie jugée intéressante est extraite du récipient et les composants en suspension dans cette partie extraite, sont ensuite déposés d'une façon ou d'une autre sur une plaque d'analyse.

On considère en effet qu'il convient d'extraire de la suspension cellulaire brute, cette seule partie intéressante pour éviter que les autres composants de cette suspension ne viennent perturber l'analyse, en masquant les composants de cette partie intéressante.

Cependant, cette méthode présente un certain nombre d'inconvénients, car on supprime de la suspension cytologique la plupart des composants permettant d'évaluer le contexte et l'environnement des prélèvements.

Le but de l'invention est donc de résoudre ces problèmes.

A cet effet, l'invention a pour objet un procédé de préparation d'une suspension cytologique à partir d'une suspension cellulaire brute obtenue à partir de prélèvements tissulaires solides et contenant différents composants solides, caractérisé en ce qu'il comporte les étapes suivantes :
- on verse la suspension cellulaire brute dans un récipient,
- on sépare les différents composants solides de celle-ci, selon un gradient de densité, dans le récipient,
- on retire du récipient, certains des composants ainsi séparés, et
- on remet en suspension les composants solides restants.

L'invention sera mieux comprise à la lecture de la description qui va suivre, donnée uniquement à titre d'exemple et faite en se référant aux dessins annexés, sur lesquels :

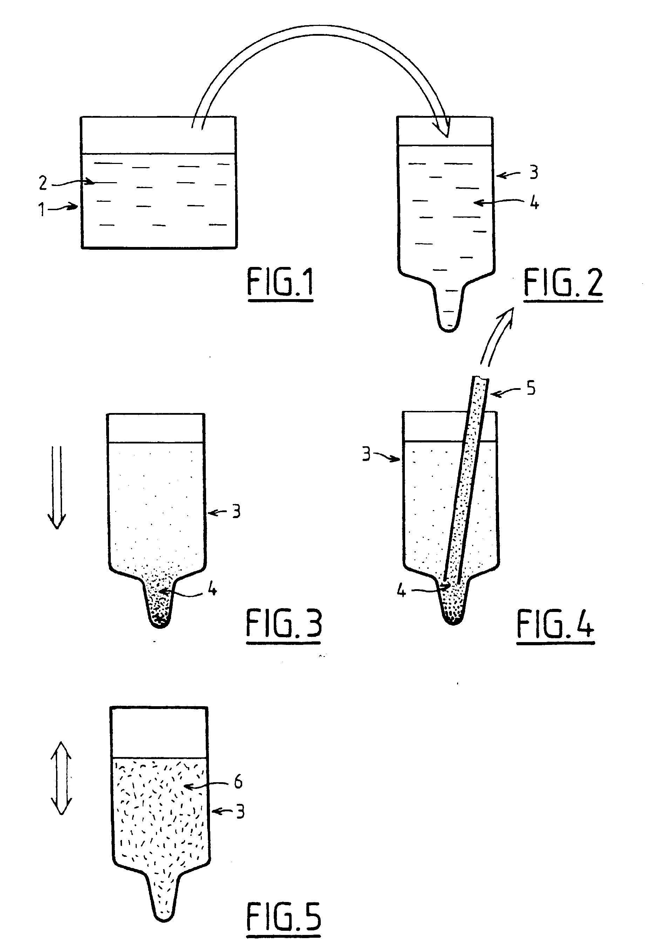

- les Figs.1 à 5 illustrent de façon schématique les différentes étapes d'un procédé selon l'invention.

L'invention concerne donc un procédé de préparation d'une suspension cytologique à partir d'une suspension cellulaire brute obtenue à partir de prélèvements tissulaires solides et contenant différents composants solides.

Ces prélèvements sont par exemple des prélèvements cervicaux ou vaginaux effectués de façon classique par un praticien à l'aide d'une brosse spéciale de prélèvement.

Cette brosse est ensuite plongée dans un fixateur contenu dans un flacon comme cela est illustré sur la figure 1, dans laquelle le flacon est désigné par la référence générale 1 et le fixateur par la référence générale 2.

Ceci permet alors de former dans ce flacon 1 une suspension cellulaire brute qui est donc obtenue à partir de prélèvements tissulaires solides.

Selon le procédé suivant l'invention, cette suspension cellulaire brute est alors versée dans un récipient comme cela est illustré sur la figure 3, dans laquelle le récipient est désigné par la référence générale 3 et la suspension cellulaire brute par la référence générale 4.

L'étape suivante du procédé selon l'invention, illustrée sur la figure 3, consiste à séparer les différents composants solides de cette suspension, selon un gradient de densité, dans le récipient 3.

Cette séparation peut par exemple être réalisée en laissant reposer la suspension pendant une période de temps suffisante ou encore en faisant subir à cette suspension, dans le récipient, une centrifugation, ce qui permet d'obtenir cette séparation relativement rapidement.

Après cette opération de séparation, les composants solides de la suspension sont donc répartis en fonction de leur densité, dans le récipient 3.

Les composants ayant la densité la plus élevée essentiellement les cellules normales, basales, parabasales et les amas de cellules endocervicales ainsi que le cas échéant les cellules pathologiques, sont dans la zone de fond de la suspension et les composants ayant la densité la plus faible, sont dans la zone de surface de celle-ci.

Une telle répartition permet alors, lors d'une étape illustrée sur la figure 4, de retirer par exemple par pompage, de la suspension cellulaire brute, certains des composants de celle-ci, essentiellement les polynucléaires, les débris de cytoplasme et d'hématies et une partie des cellules superficielles.

Ce pompage est illustré sur la figure 4, par un tronçon de conduit de pompage désigné par la référence générale 5, dont une première extrémité est plongée dans le récipient 3, par exemple à la surface du culot cellulaire où se trouvent des composants non désirés de celle-ci présentant une densité intermédiaire essentiellement les cellules intermédiaires et superficielles et dont une seconde extrémité est raccordée à des moyens de pompage de type classique (non représentés).

On procède à une aspiration douce à la surface du culot cellulaire, de manière à ne pas entraîner la totalité du culot, mais seulement la surface de celui-ci.

Ensuite, les composants solides restant dans le récipient sont remis en suspension comme cela est illustré sur la figure 5, afin d'obtenir une suspension cytologique qui est désignée par la référence générale 6 sur cette figure 5.

On voit donc apparaître à la lumière de ce qui vient d'être décrit, que suivant le procédé selon l'invention, on retire de la suspension, certains composants que l'on estime gênants, pour éviter que ceux-ci ne viennent perturber l'analyse postérieure de cette suspension, tout en conservant dans la suspension cytologique, des composants utiles à l'analyse et à l'interprétation de celle-ci à la vue du contexte et de l'environnement dans lesquels s'est effectué le prélèvement.

Ceci n'était pas le cas avec les procédés de l'état de la technique, car la suspension cytologique était obtenue par extraction de la suspension cellulaire brute d'une partie sélectionnée de celle-ci uniquement, avec pour conséquence une absence de contexte rendant plus délicate l'analyse de celle-ci.

Dans l'exemple de réalisation décrit en regard de ces figures, les composants retirés de la suspension sont des composants situés dans une zone intermédiaire de densité, car on a observé que dans le cas d'analyses de suspensions cytologiques cervicales ou vaginales, la qualité de celles-ci est grandement améliorée si l'on retire de la suspension cytologique au moins une partie des composants correspondants, car ils sont peu utiles à l'analyse et peuvent au contraire gêner celle-ci en venant masquer d'autres composants plus importants.

Ceci permet donc d'obtenir une suspension cytologique qui regroupe à la fois les composants directement intéressants pour l'analyse et des composants permettant d'éclairer celle-ci sur le contexte du prélèvement réalisé, mais avec une concentration réduite, afin de ne pas perturber l'analyse des autres composants, par exemple en masquant ceux-ci.

Bien entendu, différentes variantes de ce procédé peuvent être envisagées.

## Revendications

1. Procédé de préparation d'une suspension cytologique à partir d'une suspension cellulaire brute obtenue à partir de prélèvements tissulaires solides et contenant différents composants solides, caractérisé en ce qu'il comporte les étapes suivantes :
- on verse (Figs.1 et 2) la suspension cellulaire brute (4) dans un récipient (3),
- on sépare (Fig.3) les différents composants solides de celle-ci, selon un gradient de densité, dans le récipient (3),
- on retire (Fig.4) du récipient (3), certains des composants ainsi séparés, et
- on remet en suspension (Fig.5), les composants restants dans le récipient (3), afin d'obtenir la suspension cytologique (6).

2. Procédé selon la revendication 1, caractérisé en ce que les composants sont séparés en laissant reposer la suspension.

3. Procédé selon la revendication 1, caractérisé en ce que les composants sont séparés par centrifugation.

4. Procédé selon l'une quelconque des revendications précédentes, caractérisé en ce que les composants retirés du récipient sont pompés (5) dans celui-ci.

5. Procédé selon l'une quelconque des revendications précédentes, caractérisé en ce que les composants retirés du récipient (3) sont des composants de densité intermédiaire situés à un niveau intermédiaire de la suspension entre la zone de fond de celle-ci où se trouvent les composants de densité la plus élevée et la zone de surface de celle-ci où se trouvent les composants de densité la plus faible, après séparation.

6. Procédé selon l'une quelconque des revendications précédentes, caractérisé en ce que la suspension est une suspension cytologique cervicale.

7. Procédé selon l'une quelconque des revendications 1 à 5, caractérisé en ce que la suspension est une suspension cytologique vaginale.
